# EUROPÄISCHE PATENTSCHRIFT

(11) **EP 3 551 985 B1**
(45) Veröffentlichungstag und Bekanntmachung des Hinweises auf die Patenterteilung: **03.11.2021**
(21) Anmeldenummer: 17808066.9
(22) Anmeldetag: 29.11.2017
(51) Int. Cl.: G01M 3/00

(54) **SYSTEM UND VERFAHREN ZUR BESTIMMUNG VON LUFTDICHTHEIT EINES GEBÄUDES**
SYSTEM AND METHOD FOR DETERMINING THE AIR-TIGHTNESS OF A BUILDING
SYSTÈME ET PROCÉDÉ DE DÉTERMINATION DE L'ÉTANCHÉITÉ À L'AIR D'UN BÂTIMENT

(30) Priorität: 07.12.2016 DE 102016224375
(43) Veröffentlichungstag der Anmeldung: 16.10.2019
(73) Patentinhaber: Deutsches Zentrum für Luft- und Raumfahrt e.V., 51147 Köln (DE)
(72) Erfinder: TIDDENS, Arne, 50858 Köln (DE); SCHMIEDT, Jacob Estevam, 51103 Köln (DE); RÖGER, Marc, 74182 Obersulm (DE)
(74) Vertreter: dompatent von Kreisler Selting Werner - Partnerschaft von Patent- und Rechtsanwälten mbB
(86) Internationale Anmeldenummer: PCT/EP2017/080855
(87) Internationale Veröffentlichungsnummer: WO 2018/104129

(56) Entgegenhaltungen:
- DE-A1- 10 314 366
- JP-A- 2003 065 880
- US-A- 4 901 576
- US-A1- 2016 091 387
- Mark Goodman: "Testing Building Envelope Leaks With Airborne Ultrasound", , 15. August 2003 (2003-08-15), XP055438169, Gefunden im Internet: URL:https://assets.tequipment.net/assets/1 /26/Documents/Flir/applications-buildingen velopes.pdf [gefunden am 2018-01-04]
- I. ALLARD ET AL: "Methods for air tightness analysis for residential buildings in Nordic countries", WATER POLLUTION VIII: MODELLING, MONITORING AND MANAGEMENT, Bd. 1, 5. September 2012 (2012-09-05), Seiten 311-322, XP055438172, Southampton, UK ISSN: 1746-448X, DOI: 10.2495/ARC120281 ISBN: 978-1-84564-042-2

## Beschreibung

Die vorliegende Erfindung betrifft ein System und ein Verfahren zur Bestimmung von Luftdichtheit eines Gebäudes.

Zur Bestimmung der Luftdichtheit eines Gebäudes sind zwei Messmethoden Standard.

Bei dem sogenannten Blower-Door-Test wird der Differenzdruck zwischen den Innenräumen des Gebäudes und der Umgebung des Gebäudes als Maß für die Luftdichtheit verwendet. Hierbei wird die Eingangstür oder eine andere Öffnung des Gebäudes mit einem Ventilator ausgestattet. Über den Ventilator kann ein konstanter Über- oder Unterdruck im Gebäude erzeugt werden. Der Luftvolumenstrom durch den Ventilator wird gemessen. Dies ermöglicht die Quantifizierung der integralen Luftdichtheit des Gebäudes. Mit Rauchspendern oder Luftgeschwindigkeitsmessern können weiterhin lokale Luftströmungen detektiert werden, was eine qualitative Bestimmung von Ort und Größe einer undichten Stelle ermöglicht.

Der Blower-Door-Test hat jedoch den Nachteil, dass dieser in der Regel zeit- und kostenintensiv ist. Für diesen Test müssen der Ventilator in die Außentür oder eine andere Öffnung eingesetzt werden und entsprechend abgedichtet werden. Gewollte Öffnungen, wie beispielsweise Vorrichtungen zur Lüftung von Räumen, müssen abgedichtet werden. Der Messvorgang kann somit inklusive Vorbereitung mehrere Stunden dauern. Ferner besteht bei dem Blower-Door-Test der Nachteil, dass es mittels Rauchspendern oder Luftgeschwindigkeitsmessern relativ schwierig ist, Ort und Größe von undichten Stellen zu ermitteln.

Eine weitere Methode ist das sogenannte Tracergas-Verfahren. Hierbei wird ein Gas, das leicht zu detektieren ist, kontinuierlich in das zu untersuchende Gebäude eingedüst, bis eine konstante Konzentration gemessen werden kann. Die Tracergas-Eindüsung wird dann gestoppt, und aus der Abklingkurve der Tracergas-Konzentration wird dann die Luftdichtheit des Gebäudes bestimmt. Diese Methode benötigt eine mehrstündige Eindüsung des Tracergases. Dieses ist häufig atemluftverdrängend und/oder klimaschädlich. Während der Messung ist daher eine anderweitige Nutzung des Gebäudes stark beeinträchtigt. Ferner besteht die Schwierigkeit, dass Wind die Messung verfälschen könnte.

Mark Goodman, "Testing Building Envelope Leaks With Airborne Ultrasound" (InfraMation 2003), offenbart ein System zum Auffinden von Wasserleckage und Energieverlusten an Gebäuden mit den Merkmalen des Oberbegriffs des Anspruch 1. JP 2003 065882 offenbart ein weiteres System zum Auffinden von Wasserleckage an Gebäuden mittels Ultraschall. Ein weiteres System zum Bestimmen von Leckage und deren Positionen an Gebäuden mittels Ultraschall offenbart US 2016/00911387 A1. Schließlich offenbart DE 103 14 366 A1 ein System zur Prüfung der Dichtigkeit von Kabinen von Kraftfahrzeugen.

Es ist daher die Aufgabe der vorliegenden Erfindung, ein System und Verfahren zur Bestimmung der Luftdichtheit eines Gebäudes zu schaffen, die eine kürzere Messdauer als die bekannten Verfahren haben, und darüber hinaus auf einfache Art und Weise kostengünstig anwendbar ist.

Das erfindungsgemäße System ist definiert durch den Anspruch 1.

Das erfindungsgemäße System zur Bestimmung von Luftdichtheit eines Gebäudes mit mehreren Wänden sowie von Positionen von undichten Stellen an dem Gebäude besteht aus mindestens einem Ultraschallsender und mindestens einem Ultraschallempfänger, wobei der mindestens eine Ultraschallsender und der mindestens eine Ultraschallempfänger an unterschiedlichen Seiten mindestens einer der Wände des Gebäudes anordenbar sind, wobei der Ultraschallempfänger von dem Ultraschallsender ausgesandte Ultraschallsignale empfängt. Ferner weist das System eine Auswerteeinrichtung zur Bestimmung der Luftdichtheit der Wand sowie der Position von undichten Stellen an der Wand mittels der von dem Ultraschallempfänger empfangenen Signale und über die Position des Ultraschallsenders und der Position des Ultraschallempfängers sowie dem Zeitpunkt und der Form der ausgesandten Ultraschallsignale, auf.

Unter "Wand" eines Gebäudes werden im Rahmen der Erfindung sämtliche das Gebäude begrenzende Teile verstanden und somit neben den klassischen Außenwänden auch Türen, Fenster, Glaswände oder auch das Dach des Gebäudes.

Die Erfindung macht sich das Phänomen zunutze, dass die Wände des Gebäudes nur den Schall leiten, der nahe der Resonanzfrequenz der jeweiligen Wand liegt. Falls eine Öffnung in der Wand des Gebäudes existiert, können hingegen auch andere Frequenzen diese durchdringen. Die Verwendung von Ultraschall hat den Vorteil, dass einerseits hierzu nur geringe Störgeräusche in einer normalen Umgebung existieren und darüber hinaus Ultraschall eine Wellenlänge von 1 mm bis 1 cm hat, was das Durchdringen von Öffnungen kleiner Größenordnungen erleichtert.

Durch das erfindungsgemäße System wird auf einfache Art und Weise ermöglicht, die Luftdichtheit der Wand eines Gebäudes zu prüfen, indem lediglich der Ultraschallsender auf einer Seite der Wand und der Ultraschallempfänger auf der anderen Seite der Wand angeordnet werden muss. Hierfür benötigt es nur eine kurze Zeitdauer. Darüber hinaus ist Ultraschall außerhalb der menschlichen Wahrnehmung, so dass die Beeinträchtigung der Nutzung des Gebäudes äußerst gering ist. Ferner spielt Wind einen geringen Einfluss, da die Messtechnik die Ausbreitung von Schall verwendet, der gegenüber Wind eine relativ geringe Empfindlichkeit besitzt. Dadurch ist der Einsatz des erfindungsgemäßen Systems witterungsunabhängig.

Gemäß der Erfindung ist vorgesehen, dass das erfindungsgemäße System auch zur Bestimmung der jeweiligen Größe der undichten Stellen geeignet ist. Der Ultraschallsender sendet dabei Ultraschallsignale unterschiedlicher Frequenz aus, wobei die Auswerteeinrichtung die Größe der undichten Stellen zusätzlich über die Frequenz der ausgesandten Ultraschallsignale und der Frequenz der empfangenen Signale bestimmt. Hierbei wird sich der Effekt zunutze gemacht, dass die Transmission von Schall durch eine Öffnung abhängig von der Frequenz ist. Im idealisierten Fall einer kreisförmigen Öffnung nimmt die austretende Schallleistung schlagartig ab, wenn die Frequenz einen bestimmten Schwellenwert überschreitet. Der Schwellenwert entspricht genau der Frequenz, bei der die Wellenlänge des Ultraschallsignals dem Durchmesser der Öffnung entspricht. Somit lässt sich die Größe einer undichten Stelle auf einfache Art und Weise bestimmen.

Vorzugsweise ist vorgesehen, dass der mindestens eine Ultraschallsender in dem Gebäude und der mindestens eine Ultraschallempfänger außerhalb des Gebäudes anordenbar sind. Grundsätzlich ist aber auch eine umgekehrte Anordnung, d.h. dass der mindestens eine Ultraschallsender außerhalb des Gebäudes und der mindestens eine Ultraschallempfänger innerhalb des Gebäudes angeordnet ist, möglich.

Je nach Anwendungsfall ist die entsprechende Anordnung von Vorteil.

Der Ultraschallsender und/oder der Ultraschallempfänger können bewegbar ausgebildet sein.

So kann beispielsweise der Ultraschallempfänger außerhalb des Gebäudes bewegt werden, um die zu untersuchende Wand abzuscannen. Dies ist insbesondere von Vorteil, wenn mehrere Ultraschallsender verwendet werden, die verteilt in dem Gebäude angeordnet sind. Dadurch kann mit einem einzigen Messvorgang die Luftdichtheit des gesamten Gebäudes ermittelt werden, indem der Ultraschallempfänger außerhalb des Gebäudes um das Gebäude herum bewegt wird und somit die Wände von außen abscannen kann.

Der mindestens eine Ultraschallsender und/oder der mindestens eine Ultraschallempfänger können jeweils eine Positionsermittlungseinrichtung aufweisen, mit der die Position des mindestens einen Ultraschallsenders und/oder des mindestens einen Ultraschallempfängers bestimmt werden kann. Die jeweils bestimmte Position kann an die Auswerteeinrichtung übermittelt werden. Grundsätzlich ist es jedoch auch möglich, dass die Positionen des Ultraschallsenders und/oder des Ultraschallempfängers von dem Benutzer in die Auswerteeinrichtung eingegeben werden. Das Vorsehen einer Positionsermittlungsvorrichtung ist insbesondere bei einem bewegbaren Ultraschallempfänger und/oder Ultraschallsender von besonderem Vorteil. Beispielsweise kann dann während der Bewegung des Ultraschallsenders und/oder des Ultraschallempfängers kontinuierlich die Position bestimmt werden und an die Auswerteeinrichtung übermittelt werden.

In einer bevorzugten Ausführungsform der Erfindung weist das System ein Fluggerät oder ein Fahrzeug auf, wobei der mindestens eine Ultraschallsender und/oder der mindestens eine Ultraschallempfänger an dem Fluggerät oder dem Fahrzeug angeordnet ist. Über ein Fluggerät oder ein Fahrzeug können der Ultraschallsender und/oder der Ultraschallempfänger in vorteilhafter Weise bewegbar ausgebildet werden. Das Fluggerät kann beispielsweise ein sogenanntes UAV (Unmanned Aerial Vehicle) sein. Über das Fluggerät können insbesondere auch Gebäudeteile in großer Höhe vermessen werden.

Vorzugsweise ist vorgesehen, dass der Ultraschallsender Ultraschallsignale mit veränderbarer Pulsform, Frequenz und/oder Laufzeit aussendet. Dabei kann vorgesehen sein, dass der Ultraschallsender Ultraschallsignale mit Kombinationen von unterschiedlichen Frequenzbereichen, Frequenzmodulationen, Amplituden, Amplitudenmodulationen, Pulslängen und/oder Pulslängenmodulationen aussendet. Auf diese Weise können die vorhandenen undichten Stellen in vorteilhafter Weise charakterisiert werden. Die Erzeugung der unterschiedlichen Ultraschallsignale kann dadurch ermöglicht werden, indem der Ultraschallsender beispielsweise eine entsprechende Modulationseinrichtung aufweist.

Vorzugsweise ist vorgesehen, dass die Auswerteeinrichtung bei der Bestimmung der Luftdichtheit des Gebäudes sowie der Position von undichten Stellen an dem Gebäude und/oder der Größe der undichten Stellen zusätzlich Referenzdaten zum Vergleich mit den empfangenen Signalen verwendet. Die Referenzdaten können beispielsweise durch vorangegangene Messungen dem System angelernt werden. Insbesondere durch die zuvor genannten unterschiedlichen Ultraschallsignale lässt sich mittels der Referenzdaten die Art der undichten Stellen in vorteilhafter Weise bestimmen. Beispielsweise kann über Referenzdaten zwischen einer defekten Fensterdichtung und einer andersartigen Leckage unterschieden werden. Dadurch kann mittels der Messung mit dem erfindungsgemäßen System unmittelbar auf den Handlungsbedarf bei einer detektierten undichten Stelle geschlossen werden.

Grundsätzlich können für die Ermittlung der Position von undichten Stellen und deren Ausdehnung Referenzdaten in sogenannten Schallpegelkarten erstellt werden. Der Schall nimmt quadratisch mit der Distanz von der undichten Stelle ab. Über die Schallpegelkarten kann somit in vorteilhafter Weise auf die Position der undichten Stelle sowie deren Ausdehnung geschlossen werden.

Das erfindungsgemäße System kann insbesondere mindestens einen ersten und mindestens einen zweiten Ultraschallsender vorsehen, wobei der mindestens eine erste Ultraschallsender in dem Gebäude und der mindestens zweite Ultraschallsender außerhalb des Gebäudes anordenbar ist, wobei der mindestens eine zweite Ultraschallsender zweite Ultraschallsignale zur Verstärkung der Ultraschallsignale des mindestens einen ersten Ultraschallsenders und/oder zur Eliminierung von Umgebungsgeräuschen aussendet. Die Ultraschallsignale des ersten und zweiten Ultraschallsenders interferieren hierbei und es entsteht eine sogenannte konstruktive Interferenz. Das Ultraschallsignal des ersten Ultraschallsenders wird somit mittels der zweiten Ultraschallsignale des zweiten Ultraschallsenders verstärkt, so dass sich diese besser gegenüber dem Umgebungsgeräusch abheben, so dass ein verbessertes Signal-Rausch-Verhältnis besteht. Umgebungsgeräusche im Ultraschallbereich können beispielsweise durch das Fahrzeug oder das Fluggerät, beispielsweise durch Luftwirbel des Fluggeräts, entstehen. Mittels des zweiten Ultraschallsenders kann sich das Ultraschallsignal jedoch gegenüber diesen Geräuschen abheben.

Zur Eliminierung der Umgebungsgeräusche mittels des zweiten Ultraschallsenders wird sogenannter Antischall erzeugt, so dass die Umgebungsgeräusche im Ultraschallbereich zumindest teilweise ausgelöscht werden. Dies bezeichnet man als sogenannte destruktive Interferenz.

Bezüglich Umgebungsgeräusche ist grundsätzlich möglich, dass diese zuvor mittels einer Testmessung bestimmt werden und diese dann von dem gemessenen Signal abgezogen werden.

Die vorliegende Erfindung betrifft ferner ein Verfahren gemäß Anspruch 7 zur Bestimmung von Luftdichtheit eines Gebäudes mit mehreren Wänden sowie von Positionen von undichten Stellen an dem Gebäude. Das erfindungsgemäße Verfahren weist folgende Schritte auf:
- Erzeugen von Ultraschallsignalen an einer ersten Seite einer der Wände mittels mindestens eines Ultraschallsenders,
- Empfangen von durch die Ultraschallsignale hervorgerufenen Signalen an der der ersten Seite abgewandten zweiten Seite der Wand mittels mindestens eines Ultraschallempfängers,
- Auswerten der von dem Ultraschallempfänger empfangenen Signale sowie von Informationsdaten über die Position des Ultraschallsenders und die Position des Ultraschallempfängers sowie über den Zeitpunkt und die Form der ausgesandten Ultraschallsignale zur Bestimmung der Luftdichtheit der Wand sowie der Positionen von undichten Stellen an der Wand.

Das erfindungsgemäße Verfahren ist insbesondere mit dem zuvor beschriebenen erfindungsgemäßen System durchführbar. Grundsätzlich bestehen die bei dem erfindungsgemäßen System beschriebenen Vorteile auch beim dem erfindungsgemäßen Verfahren.

Das erfindungsgemäße Verfahren ermöglicht in vorteilhafter Weise und mit wenig konstruktivem Aufwand, die Luftdichtheit des Gebäudes sowie die Position von undichten Stellen an dem Gebäude zu bestimmen. Dies geschieht durch Rückrechnung aus den Größen:
- Position von Ultraschallsender,
- Position vom Ultraschallempfänger sowie
- Zeitpunkt und Form des ausgesandten Signals.

Außer dem Aufstellen vom Ultraschallsender und Ultraschallempfänger ist keine weitere Präparation des Gebäudes notwendig, so dass die Dauer der Durchführung des erfindungsgemäßen Verfahrens gegenüber herkömmlichen Verfahren deutlich verkürzt ist.

Vorzugsweise ist vorgesehen, dass mindestens ein Ultraschallsender in dem Gebäude und mindestens einer der Ultraschallempfänger außerhalb des Gebäudes angeordnet wird. Grundsätzlich ist jedoch je nach Anforderung auch eine umgekehrte Anordnung möglich.

Bei dem erfindungsgemäßen Verfahren ist ferner vorgesehen, dass Ultraschallsignale unterschiedlicher Frequenz erzeugt werden, wobei die Frequenz der Ultraschallsignale und der empfangenen Signale zur Bestimmung der Größe der undichten Stellen ausgewertet werden. Wie bereits zuvor beschrieben worden ist, ist die Größe einer undichten Stelle über eine entsprechende Modulation der Frequenz bestimmbar. Somit lässt sich mit dem erfindungsgemäßen Verfahren in vorteilhafter Weise die Größe einer undichten Stelle bestimmen. Dadurch kann beispielsweise ein Handlungsbedarf abgeleitet werden, da bei beispielsweise sehr großen undichten Stellen eine unmittelbare Sanierung der undichten Stelle anzuraten wäre.

Vorzugsweise ist vorgesehen, dass der mindestens eine Ultraschallsender und/oder der mindestens eine Ultraschallempfänger bewegbar sind. Das erfindungsgemäße Verfahren kann somit vorsehen, dass während der Messung der Ultraschallsender und/oder der Ultraschallempfänger bewegt werden. Dadurch lässt sich in vorteilhafter Weise die Wand, die vermessen werden soll, abscannen. Diese Ausführungsform des erfindungsgemäßen Verfahrens ist von besonderem Vorteil, wenn beispielsweise mehrere Ultraschallsender in dem Gebäude angeordnet sind, so dass mehrere Wände des Gebäudes in einem Messvorgang behandelt werden. Durch einen bewegbaren Ultraschallempfänger kann somit ein großer Teil des Gebäudes oder beispielsweise auch das gesamte Gebäude auf einfache Art und Weise abgescannt werden.

Dabei kann vorgesehen sein, dass der mindestens eine Ultraschallsender oder der mindestens eine Ultraschallempfänger über ein Fluggerät oder ein Fahrzeug bewegbar sind. Durch das Vorsehen eines Fluggeräts, auf dem der Ultraschallempfänger oder der Ultraschallsender angeordnet sind, können auch größere Höhen an dem Gebäude erreicht werden, so dass auch eine Vermessung größerer Gebäude möglich ist. Insbesondere ist es auch möglich, das Dach eines Gebäudes zu vermessen.

Das Fluggerät und/oder das Fahrzeug können beispielsweise unbemannt sein und über eine Fernsteuerung gesteuert werden. Auch besteht die Möglichkeit, dass das Fluggerät oder das Fahrzeug automatisch einer zuvor bestimmten Route folgen.

Das erfindungsgemäße Verfahren kann auch vorsehen, dass vor dem Erzeugen von Ultraschallsignalen mittels des mindestens einen Ultraschallempfängers Testsignale der Umgebungsgeräusche, insbesondere der Geräusche des Fluggeräts oder des Fahrzeugs, empfangen werden, wobei bei der Auswertung der empfangenen, durch die Ultraschallsignale hervorgerufenen Signale die Testsignale berücksichtigt werden. Dies kann beispielsweise durch ein Abziehen der Testsignale von den empfangenen Signalen erfolgen.

Vorzugsweise ist vorgesehen, dass die Ultraschallsignale mit unterschiedlicher Pulsform, Frequenz und/oder Laufzeit ausgesendet werden. Dadurch kann eine Charakterisierung der Leckagen und eine Erhöhung des Signal-Rausch-Verhältnisses erreicht werden.

Vorzugsweise ist vorgesehen, dass die Ultraschallsignale mit Kombinationen von unterschiedlichen Frequenzbereichen, Frequenzmodulationen, Amplituden, Amplitudenmodulationen, Pulslängen und/oder Pulslängenmodulationen ausgesendet werden. Dadurch ist in besonders vorteilhafter Weise eine Charakterisierung der undichten Stellen möglich.

Das Verfahren kann insbesondere vorsehen, dass Referenzdaten mittels Testmessungen erstellt werden, wobei beim Auswerten der empfangenen Signale diese mit den Referenzdaten verglichen werden. Anhand von Charakteristiken unterschiedlicher undichter Stellen kann somit auf einfache Art und Weise auf diese geschlossen werden. Aussichtsreiche Charakterisierungen zur Unterscheidung unterschiedlicher undichter Stellen sind insbesondere durch die zuvor beschriebene Veränderung der Ultraschallsignale möglich.

Mittels des erfindungsgemäßen Verfahrens lässt sich somit beispielsweise zwischen unterschiedlichen Arten von undichten Stellen unterscheiden, beispielsweise kann zwischen einer defekten Fensterdichtung und einer andersartigen undichten Stelle unterschieden werden. Aus der Charakterisierung der undichten Stelle kann somit sofort ein eventueller Handlungsbedarf abgeleitet werden.

Das erfindungsgemäße Verfahren kann insbesondere vorsehen, sogenannte Schallpegelkarten als Referenzdaten zu erstellen. Der Schall nimmt quadratisch mit der Distanz von der undichten Stelle ab. Anhand der Schallpegelkarten, die entsprechende Informationen beinhalten, kann somit in vorteilhafter Weise die Position der undichten Stelle und deren Ausdehnung ermittelt werden.

Vorzugsweise sieht das erfindungsgemäße Verfahren vor, dass für das Auswerten der von dem mindestens einen Ultraschallempfänger empfangenen Signale eine Korrelationsfunktion zwischen den ausgesendeten Ultraschallsignalen und den empfangenen Signalen gebildet wird, um stärkere Geräusche zu unterdrücken. Auf diese Weise kann das Messergebnis verbessert werden.

Vorzugsweise ist vorgesehen, dass außerhalb des Gebäudes mittels mindestens eines zweiten Ultraschallsenders zweite Ultraschallsignale zur Verstärkung der Ultraschallsignale und/oder zur Eliminierung von Umgebungsgeräuschen ausgesendet werden. Es kann somit die zuvor beschriebene konstruktive oder destruktive Interferenz hervorgerufen werden, um somit die empfangenen Signale gegenüber Umgebungsgeräuschen hervorzuheben.

Bei dem erfindungsgemäßen Verfahren kann auch vorgesehen sein, dass der mindestens eine Ultraschallsender kontinuierlich Ultraschallsignale aussendet, und dass mittels des mindestens einen Ultraschallempfängers die Wand und/oder das Gebäude gescannt werden. Somit lassen sich in vorteilhafter Weise sehr große Bereiche des Gebäudes vermessen.

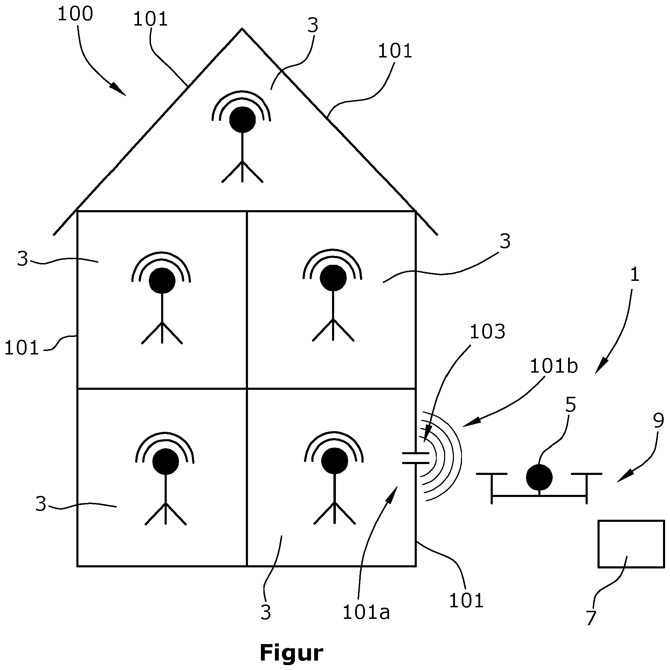

Im Folgenden werden unter Bezugnahme auf die einzige Figur das erfindungsgemäße System und das erfindungsgemäße Verfahren im Detail erläutert.

Das erfindungsgemäße System 1 und das erfindungsgemäße Verfahren dienen zur Bestimmung von Luftdichtheit eines Gebäudes 100, das aus mehreren Wänden 101 besteht. Die Wände 101 des Gebäudes 100 können hierbei klassische Seitenwände des Gebäudes, aber auch Bereiche des Daches darstellen.

Das erfindungsgemäße System 1 besteht in dem dargestellten Ausführungsbeispiel aus mehreren Ultraschallsendern 3, die in verschiedenen Räumen des Gebäudes 100 angeordnet sind. Die Ultraschallsender 3 befinden sich somit an einer ersten Seite 101a einer entsprechend zugeordneten Wand 101 des Gebäudes 100. Ein Ultraschallempfänger 5, beispielsweise ein Mikrofon, ist außerhalb des Gebäudes 100 angeordnet. Der Ultraschallempfänger 5 befindet sich somit auf der der ersten Seite 101a abgewandten Seite 101b der Wand 101. Wie aus der Figur ersichtlich ist, befindet sich eine undichte Stelle 103 an einer der Wände 101. Die von einem der Ultraschallsender 3 ausgesandten Ultraschallsignale durchdringen die Wand 101 an der undichten Stelle 103 und gelangen somit, wie schematisch dargestellt ist, an die Außenseite des Gebäudes 100. Diese Signale können nun von dem Ultraschallempfänger 5 empfangen werden. Eine schematische dargestellte Auswerteeinrichtung 7 kann mittels der von dem Ultraschallempfänger 5 empfangenen Signale und über die Positionen des oder der Ultraschallsender 3 und der Position des Ultraschallempfängers 5 sowie dem Zeitpunkt und der Form der ausgesandten Ultraschallsignale die Luftdichtheit der entsprechenden Wand 101 sowie der Position der undichten Stelle 103 bestimmen. Die Position des oder der Ultraschallsender/s 3 sowie des Ultraschallempfängers 5 können der Auswerteeinrichtung vorgegeben werden oder werden von Positionsermittlungseinrichtungen, die die Position des Ultraschallempfängers und die Position des oder der Ultraschallsender/s 3 bestimmen, übermittelt werden.

Der Ultraschallempfänger 5 ist in dem in der Figur dargestellten Ausführungsbeispiel an einem Fluggerät 9 angeordnet und somit bewegbar. Über das Fluggerät 9 kann der Ultraschallempfänger 5 entlang dem Gebäude 100 bewegt werden und somit die Wände 101 des Gebäudes 100 in vorteilhafter Weise abscannen, um undichte Stellen zu ermitteln. Das erfindungsgemäße System 1 kann neben den Ultraschallsendern 3, die sich in dem Gebäude 100 befinden, auch einen nicht dargestellten zweiten Ultraschallsender umfassen, der außerhalb des Gebäudes 100 angeordnet ist. Mittels dieses zweiten Ultraschallsenders können zweite Ultraschallsignale zur Verstärkung der Ultraschallsignale der Ultraschallsender 3 und/oder zur Eliminierung von Umgebungsgeräuschen ausgesendet werden.

Das erfindungsgemäße System 1 kann auf besonders vorteilhafte Weise und mit einem geringen vorrichtungstechnischen Aufwand sowie sehr schnell die Luftdichtheit eines Gebäudes bestimmen. Ferner bestimmt das System 1 neben Position von undichten Stellen 103 auch deren jeweilige Größe in besonders vorteilhafter Weise.

Das erfindungsgemäße System 1 kann ferner nicht dargestellte Modulationseinrichtungen aufweisen, über die die Ultraschallsignale, die die Ultraschallsender aussenden, veränderbar, insbesondere modellierbar sind.

## Patentansprüche

1. System (1) zur Bestimmung von Luftdichtheit eines Gebäudes (10) mit mehreren Wänden (101) sowie von Positionen von undichten Stellen (103) an dem Gebäude (101), bestehend aus mindestens einem Ultraschallsender (3) und mindestens einem Ultraschallempfänger (5), wobei der mindestens eine Ultraschallsender (3) und der mindestens eine Ultraschallempfänger (5) an unterschiedlichen Seiten (101a, 101b) mindestens einer der Wände (101) des Gebäudes (100) anordenbar sind, wobei der Ultraschallempfänger (5) von dem Ultraschallsender (3) ausgesandte Ultraschallsignale empfängt, und aus einer Auswerteeinrichtung (7) zur Bestimmung der Luftdichtheit der Wand (101) sowie der Positionen von undichten Stellen (103) an der Wand (101) mittels der von dem Ultraschallempfänger (5) empfangenen Signale und über die Position des Ultraschallsenders (3) und der Position des Ultraschallempfängers (5) sowie den Zeitpunkt und der Form der ausgesandten Ultraschallsignale, **dadurch gekennzeichnet, dass** zur Bestimmung der jeweiligen Größe der undichten Stellen der Ultraschallsender (3) Ultraschallsignale unterschiedlicher Frequenz aussendet, wobei die Auswerteeinrichtung (7) die Größe der undichten Stellen zusätzlich über die Frequenz der ausgesandten Ultraschallsignale und der Frequenz der empfangenen Signale bestimmt.

2. System nach Anspruch 1, **dadurch gekennzeichnet, dass** der mindestens eine Ultraschallsender (3) in dem Gebäude (100) und der mindestens eine Ultraschallempfänger (5) außerhalb des Gebäudes (100) anordenbar ist.

3. System nach Anspruch 1 oder 2, **gekennzeichnet durch** ein Fluggerät (9) oder ein Fahrzeug, wobei der mindestens eine Ultraschallsender (3) oder der mindestens eine Ultraschallempfänger (5) an dem Fluggerät (9) oder dem Fahrzeug angeordnet ist.

4. System nach einem der Ansprüche 1 bis 3, **dadurch gekennzeichnet, dass** der Ultraschallsender (3) Ultraschallsignale mit veränderbarer Pulsform, Frequenz und/oder Laufzeit aussendet, wobei vorzugsweise der Ultraschallsender (3) Ultraschallsignale mit Kombinationen von unterschiedlichen Frequenzbereichen, Frequenzmodulationen, Amplituden, Amplitudenmodulationen, Pulslängen und/oder Pulslängenmodulationen aussendet.

5. System nach einem der Ansprüche 1 bis 4, **dadurch gekennzeichnet, dass** die Auswerteeinrichtung (7) bei der Bestimmung der Luftdichtheit des Gebäudes (100) sowie der Positionen von undichten Stellen (103) an dem Gebäude (100) und/oder der Größe der undichten Stellen (103) zusätzlich Referenzdaten zum Vergleich mit den empfangenen Signalen verwendet.

6. System nach einem der Ansprüche 1 bis 5, **gekennzeichnet durch** mindestens einen ersten und mindestens einen zweiten Ultraschallsender (3), wobei der mindestens eine erste Ultraschallsender (3) in dem Gebäude (100) und der mindestens zweite Ultraschallsender außerhalb des Gebäudes (100) anordenbar ist, wobei der mindestens eine zweite Ultraschallsender (3) zweite Ultraschallsignale zur Verstärkung der Ultraschallsignale des mindestens einen ersten Ultraschallsenders (3) und/oder zur Eliminierung von Umgebungsgeräuschen aussendet.

7. Verfahren zur Bestimmung von Luftdichtheit eines Gebäudes (100) mit mehreren Wänden (101) sowie von Positionen von undichten Stellen an dem Gebäude mit folgenden Schritten:
- Erzeugen von Ultraschallsignalen an einer ersten Seite (101a) einer der Wände (101) mittels mindestens eines Ultraschallsenders (3),
- Empfangen von durch die Ultraschallsignale hervorgerufenen Signalen an der der ersten Seite (101a) abgewandten zweiten Seite (101b) der Wand (101) mittels mindestens eines Ultraschallempfängers (5),
- Auswerten der von dem Ultraschallempfänger (5) empfangenen Signale sowie von Informationsdaten über die Position des Ultraschallsenders (3) und die Position des Ultraschallempfängers (5) sowie über den Zeitpunkt und die Form der ausgesandten Ultraschallsignale zur Bestimmung der Luftdichtheit der Wand (101) sowie der Positionen von undichten Stellen (103) an der Wand (101),
**dadurch gekennzeichnet, dass** Ultraschallsignale unterschiedlicher Frequenz erzeugt werden, und wobei die Frequenz der Ultraschallsignale und empfangene Signale zur Bestimmung der Größe der undichten Stellen ausgewertet werden.

8. Verfahren nach Anspruch 7 , **dadurch gekennzeichnet, dass** der mindestens eine Ultraschallsender (3) in dem Gebäude (100) und der mindestens eine Ultraschallempfänger (5) außerhalb des Gebäudes (100) angeordnet wird.

9. Verfahren nach einem der Ansprüche 7 oder 8, **dadurch gekennzeichnet, dass** der mindestens eine Ultraschallsender (3) und/oder der mindestens eine Ultraschallempfänger (5) bewegbar sind, wobei vorzugsweise der mindestens eine Ultraschallsender (3) oder der mindestens eine Ultraschallempfänger (5) über ein Fluggerät (9) oder ein Fahrzeug bewegbar sind.

10. Verfahren nach einem der Ansprüche 7 bis 9, **dadurch gekennzeichnet, dass** vor dem Erzeugen von Ultraschallsignalen mittels des mindestens einen Ultraschallempfängers (5) Testsignale der Umgebungsgeräusche, insbesondere der Geräusche des Fluggeräts (9) oder des Fahrzeugs, empfangen werden, wobei bei der Auswertung der empfangenen, durch die Ultraschallsignale hervorgerufenen Signale die Testsignale berücksichtigt werden.

11. Verfahren nach einem der Ansprüche 7 bis 10, **dadurch gekennzeichnet, dass** die Ultraschallsignale mit unterschiedlicher Pulsform, Frequenz und/oder Laufzeit ausgesendet werden, wobei vorzugsweise die Ultraschallsignale mit Kombinationen von unterschiedlichen Frequenzbereichen, Frequenzmodulationen, Amplituden, Amplitudenmodulationen, Pulslängen und/oder Pulslängenmodulationen ausgesendet werden.

12. Verfahren nach einem der Ansprüche 7 bis 11, **dadurch gekennzeichnet, dass** für das Auswerten der von dem mindestens einen Ultraschallempfänger (5) empfangenen Signale eine Korrelationsfunktion zwischen den ausgesendeten Ultraschallsignalen und den empfangenen Signalen gebildet wird, um Störgeräusche zu unterdrücken.

13. Verfahren nach einem der Ansprüche 7 bis 12, **dadurch gekennzeichnet, dass** Referenzdaten mittels Testmessungen erstellt werden, wobei bei dem Auswerten die empfangenen Signale mit den Referenzdaten verglichen werden.

14. Verfahren nach einem der Ansprüche 8 bis 13, **dadurch gekennzeichnet, dass** außerhalb des Gebäudes (100) mittels mindestens eines zweiten Ultraschallsenders zweite Ultraschallsignale zur Verstärkung der Ultraschallsignale und/oder zur Eliminierung von Umgebungsgeräuschen ausgesendet werden.

15. Verfahren nach einem der Ansprüche 7 bis 14, **dadurch gekennzeichnet, dass** der mindestens eine Ultraschallsender (3) kontinuierlich Ultraschallsignale aussendet und dass mittels des mindestens einen Ultraschallempfängers (5) die Wand (101) und/oder das gesamte Gebäude (100) gescannt wird.

## Claims

1. A system (1) for determining the airtightness of a building (10) having several walls (101) and positions of leaks (103) on the building (101), comprising at least one ultrasonic transmitter (3) and at least one ultrasonic receiver (5), wherein the at least one ultrasonic transmitter (3) and the at least one ultrasonic receiver (5) are adapted to be arranged on different sides (101a, 101b) of at least one of the walls (101) of the building (100), wherein the ultrasonic receiver (5) receives ultrasonic signals emitted by the ultrasonic transmitter (3), and comprising an evaluation device (7) for determining the airtightness of the wall (101) and the positions of leaks (103) on the wall (101) using the signals received by the ultrasonic receiver (5) and via the position of the ultrasonic transmitter (3) and the position of the ultrasonic receiver (5), and the timing and form of the emitted ultrasonic signals, **characterized in that** for determining the respective size of the leaks, the ultrasonic transmitter (3) emits ultrasonic signals of different frequencies, wherein the evaluation device (7) additionally determines the size of the leaks via the frequency of the emitted ultrasonic signals and the frequency of the received signals.

2. The system according to claim 1, **characterized in that** the at least one ultrasonic transmitter (3) is adapted to be arranged inside the building (100) and the at least one ultrasonic receiver (5) is adapted to be arranged outside the building (100).

3. The system according to claim 1 or 2, **characterized by** an aircraft (9) or a vehicle, wherein the at least one ultrasonic transmitter (3) or the at least one ultrasonic receiver (5) is arranged on the aircraft (9) or the vehicle.

4. The system according to any one of claims 1 to 3, **characterized in that** the ultrasonic transmitter (3) emits ultrasonic signals with modifiable pulse shape, frequency and/or propagation time, wherein the ultrasonic transmitter (3) preferably emits ultrasonic signal with combinations of different frequency ranges, frequency modulations, amplitudes, amplitude modulations, pulse lengths and/or pulse length modulations.

5. The system according to any one of claims 1 to 4, **characterized in that** the evaluation device (7) additionally uses reference data for comparing the received signals when determining the airtightness of the building (100) and the positions of leaks (103) on the building (100) and/or the size of the leaks (103).

6. The system according to any one of claims 1 to 5, **characterized by** at least one first and at least one second ultrasonic transmitter (3), wherein the at least one first ultrasonic transmitter (3) is adapted to be arranged inside the building (100) and the at least second ultrasonic transmitter is adapted to be arranged outside the building (100), wherein the at least one second ultrasonic transmitter (3) emits second ultrasonic signals for amplifying the ultrasonic signals of the at least one first ultrasonic transmitter (3) and/or for eliminating ambient noise.

7. A method for determining airtightness of a building (100) having several walls (101) and positions of leaks on the building, comprising the following steps:
- generating ultrasonic signals on a first side (101a) of one of the walls (101) using at least one ultrasonic transmitter (3),
- receiving signals caused by the ultrasonic signals on the second side (101b) of the wall (101) facing away from the first side (101a) using at least one ultrasonic receiver (5),
- evaluating the signals received by the ultrasonic receiver (5) and information data on the position of the ultrasonic transmitter (3) and the position of the ultrasonic receiver (5) as well as on the timing and form of the emitted ultrasonic signals for determining the airtightness of the wall (101) and the positions of leaks (103) on the wall (101),
**characterized in that** ultrasonic signals of different frequencies are generated, and wherein the frequency of the ultrasonic signals and received signals for determining the size of the leaks are evaluated.

8. The method according to claim 7, **characterized in that** the at least one ultrasonic transmitter (3) is arranged inside the building (100) and the at least one ultrasonic receiver (5) is arranged outside the building (100).

9. The method according to one of claims 7 or 8, **characterized in that** the at least one ultrasonic transmitter (3) and/or the at least one ultrasonic receiver (5) are movable, wherein preferably the at least one ultrasonic transmitter (3) or the at least one ultrasonic receiver (5) are movable via an aircraft (9) or a vehicle.

10. The method according to any one of claims 7 to 9, **characterized in that** before generating ultrasonic signals using the at least one ultrasonic receiver (5), test signals of the ambient noise, in particular of the noise of the aircraft (9) or the vehicle, are received, wherein the test signals are considered when evaluating the received signals caused by the ultrasonic signals.

11. The method according to any one of claims 7 to 10, **characterized in that** the ultrasonic signals are emitted with different pulse form, frequency and/or propagation time, wherein the ultrasonic signals are preferably emitted with combinations of different frequency ranges, frequency modulations, amplitudes, amplitude modulations, pulse lengths and/or pulse length modulations.

12. The method according to any one of claims 7 to 11, **characterized in that** for evaluating the signals received by the at least one ultrasonic receiver (5), a correlation function is formed between the transmitted ultrasonic signals and the received signals in order to suppress interfering noise.

13. The method according to any one of claims 7 to 12, **characterized in that** reference data are created by means of test measurements, wherein the received signals are compared with the reference data during the evaluation.

14. The method according to any one of claims 8 to 13, **characterized in that** second ultrasonic signals are emitted outside the building (100) using at last one second ultrasonic transmitter for amplifying the ultrasonic signals and/or for eliminating ambient noise.

15. The method according to any one of claims 7 to 14, **characterized in that** the at least one ultrasonic transmitter (3) continuously emits ultrasonic signals, and that the wall (101) and/or the entire building (100) is scanned by the at least one ultrasonic receiver (5).

## Revendications

1. Système (1) destiné à déterminer l'étanchéité à l'air d'un bâtiment (10) doté de plusieurs murs (101) ainsi que les positions de fuites (103) sur le bâtiment (101), constitué d'au moins un émetteur d'ultrasons (3) et d'au moins un récepteur d'ultrasons (5), dans lequel l'au moins un émetteur d'ultrasons (3) et l'au moins un récepteur d'ultrasons (5) peuvent être disposés sur des côtés différents (101a, 101b) d'au moins un des murs (101) du bâtiment (100), dans lequel le récepteur d'ultrasons (5) reçoit des signaux ultrasonores émis par l'émetteur d'ultrasons (3), et d'un dispositif d'évaluation (7) pour déterminer l'étanchéité à l'air du mur (101) ainsi que les positions des fuites (103) sur le mur (101) au moyen des signaux reçus par le récepteur d'ultrasons (5) et par le biais de la position de l'émetteur d'ultrasons (3) et de la position du récepteur d'ultrasons (5) ainsi que de l'instant et de la forme des signaux ultrasonores émis, **caractérisé en ce que**, afin de déterminer la taille respective des fuites, l'émetteur d'ultrasons (3) émet des signaux ultrasonores de fréquence différente, dans lequel le dispositif d'évaluation (7) détermine en outre la taille des fuites par le biais de la fréquence des signaux ultrasonores émis et de la fréquence des signaux reçus.

2. Système selon la revendication 1, **caractérisé en ce que** l'au moins un émetteur d'ultrasons (3) peut être disposé dans le bâtiment (100) et l'au moins un récepteur d'ultrasons (5) peut être disposé à l'extérieur du bâtiment (100).

3. Système selon la revendication 1 ou 2, **caractérisé par** un engin volant (9) ou un véhicule, dans lequel l'au moins un émetteur d'ultrasons (3) ou l'au moins un récepteur d'ultrasons (5) est disposé sur l'engin volant (9) ou le véhicule.

4. Système selon l'une des revendications 1 à 3, **caractérisé en ce que** l'émetteur d'ultrasons (3) émet des signaux ultrasonores avec une forme d'impulsion, une fréquence et/ou un temps de parcours variables, dans lequel, de préférence, l'émetteur d'ultrasons (3) émet des signaux ultrasonores avec des combinaisons de différentes gammes de fréquence, modulations de fréquence, amplitudes, modulations d'amplitude, longueurs d'impulsion et/ou modulations de longueur d'impulsion.

5. Système selon l'une des revendications 1 à 4, **caractérisé en ce que** le dispositif d'évaluation (7) utilise en outre des données de référence pour comparaison avec les signaux reçus lors de la détermination de l'étanchéité à l'air du bâtiment (100) ainsi que des positions des fuites (103) sur le bâtiment (100) et/ou de la taille des fuites (103).

6. Système selon l'une des revendications 1 à 5, **caractérisé par** au moins un premier et au moins un deuxième émetteur d'ultrasons (3), dans lequel l'au moins un premier émetteur d'ultrasons (3) peut être disposé dans le bâtiment (100) et l'au moins un deuxième émetteur d'ultrasons peut être disposé à l'extérieur du bâtiment (100), dans lequel l'au moins un deuxième émetteur d'ultrasons (3) émet des deuxièmes signaux ultrasonores destinés à amplifier les signaux ultrasonores de l'au moins un premier émetteur d'ultrasons (3) et/ou à éliminer les bruits ambiants.

7. Procédé de détermination de l'étanchéité à l'air d'un bâtiment (100) doté d'une pluralité de murs (101) et des positions de fuites sur le bâtiment, avec les étapes suivantes :
- génération de signaux ultrasonores sur un premier côté (101a) de l'un des murs (101) au moyen d'au moins un émetteur d'ultrasons (3),
- réception de signaux engendrés par les signaux ultrasonores sur le deuxième côté (101b) du mur opposé au premier côté (101a) au moyen d'au moins un récepteur d'ultrasons (5),
- évaluation des signaux reçus par le récepteur d'ultrasons (5) ainsi que des données d'information sur la position de l'émetteur d'ultrasons (3) et la position du récepteur d'ultrasons (5) ainsi que sur l'instant et la forme des signaux ultrasonores émis pour déterminer l'étanchéité à l'air du mur (101) ainsi que les positions des fuites (103) sur le mur (101),
**caractérisé en ce que** des signaux ultrasonores de différentes fréquences sont générés, et dans lequel les fréquence des signaux ultrasonores et des signaux reçus sont évaluées pour déterminer la taille des fuites.

8. Procédé selon la revendication 7, **caractérisé en ce que** l'au moins un émetteur d'ultrasons (3) est disposé dans le bâtiment (100) et l'au moins un récepteur d'ultrasons (5) est disposé à l'extérieur du bâtiment (100).

9. Procédé selon l'une des revendications 7 ou 8, **caractérisé en ce que** l'au moins un émetteur d'ultrasons (3) et/ou l'au moins un récepteur d'ultrasons (5) sont déplaçables, dans lequel, de préférence, l'au moins un émetteur d'ultrasons (3) ou l'au moins un récepteur d'ultrasons (5) sont déplaçables par le biais d'un engin volant (9) ou un véhicule.

10. Procédé selon l'une des revendications 7 à 9, **caractérisé en ce qu'**avant la génération des signaux ultrasonores au moyen de l'au moins un récepteur d'ultrasons (5), des signaux de test des bruits ambiants sont reçus, en particulier des bruits de l'engin volant (9) ou du véhicule, dans lequel les signaux d'essai sont pris en compte lors de l'évaluation des signaux reçus engendrés par les signaux ultrasonores.

11. Procédé selon l'une des revendications 7 à 10, **caractérisé en ce que** les signaux ultrasonores sont émis avec différentes formes d'impulsion, fréquences et/ou temps de parcours, dans lequel les signaux ultrasonores sont émis avec des combinaisons d'amplitudes, de gammes de fréquences, de modulations de fréquence, de modulations d'amplitude, de longueurs d'impulsion et/ou de modulations de longueur d'impulsion qui sont de préférence différentes.

12. Procédé selon l'une des revendications 7 à 11, **caractérisé en ce que** pour l'évaluation des signaux reçus par l'au moins un récepteur d'ultrasons (5), une fonction de corrélation est formée entre les signaux ultrasonores émis et les signaux reçus afin de supprimer les bruits parasites.

13. Procédé selon l'une des revendications 7 à 12, **caractérisé en ce que** les données de référence sont établies au moyen de mesures d'essai, dans lequel les signaux reçus sont comparés aux données de référence lors de l'évaluation.

14. Procédé selon l'une des revendications 8 à 13, **caractérisé en ce que** des deuxièmes signaux ultrasonores sont émis à l'extérieur du bâtiment (100) au moyen d'au moins un deuxième émetteur d'ultrasons destiné à amplifier les signaux ultrasonores et/ou à éliminer les bruits ambiants.

15. Procédé selon l'une des revendications 7 à 14, **caractérisé en ce que** l'au moins un émetteur d'ultrasons (3) émet en continu des signaux ultrasonores et **en ce que** le mur (101) et/ou l'ensemble du bâtiment (100) est balayé au moyen de l'au moins un récepteur d'ultrasons (5) .
